# EUROPÄISCHE PATENTSCHRIFT

(11) **EP 0 952 363 B1**
(45) Veröffentlichungstag und Bekanntmachung des Hinweises auf die Patenterteilung: **09.07.2003**
(21) Anmeldenummer: 98890113.8
(22) Anmeldetag: 20.04.1998
(51) Int. Cl.: F16D 3/205

(54) **Wellengelenk**
Articulated coupling for shafts
Articulation d'arbres

(43) Veröffentlichungstag der Anmeldung: 27.10.1999
(73) Patentinhaber: Pankl R&D GmbH, 8600 Bruck an der Mur (AT)
(72) Erfinder: Pankl, Gerold, Ing., 8600 Bruck an der Mur (AT); Karasek, Jo, 1010 Wien (AT)
(74) Vertreter: Patentanwälte BARGER, PISO & PARTNER

(56) Entgegenhaltungen:
- WO-A-93/02296
- FR-A- 2 550 292
- FR-A- 2 691 768
- US-A- 3 490 251

## Beschreibung

Die Erfindung betrifft ein Wellengelenk, auch Tripod genannt, bei dem das eine Wellenende mit drei Armen, die normal zur Wellenachse verlaufen, ausgestattet ist, wobei am Ende jedes Armes und um diesen drehbar nur eine einstückige Scheibe bzw. Rolle angeordnet ist, wobei die Scheibe bzw. Rolle eine sphärische, bezüglich ihres Äquators asymmetrisch begrenzte Außenkontur aufweist, und wobei weiters am Ende der entgegenstehenden Welle eine Hülse angeordnet ist, die, entsprechend der Winkellage der Arme, drei Ausnehmungen aufweist, deren Querschnitt den Rollenaußenflächen angepaßt ist, wobei die Ausnehmungen mit einem zentralen Hohlraum in Verbindung stehen, sodaß die Arme hindurchtreten können.

Allgemein besteht in den verschiedensten Gebieten des Maschinenbaues die Notwendigkeit, Drehmomente entlang von Strecken zu übertragen, die nicht geradlinig verlaufen. Ein anderes, klassisches, Mittel zur Übertragung von Drehmomenten über abgewinkelte Wellenbereiche ist das Kardangelenk, das besonders im Automobilbau Eingang gefunden hat. Ein Wellengelenk der eingangs genannten Art ist aus der FR 2 550 292 A bekannt. Die Scheiben bzw. Rollen sind dabei so ausgeführt, dass die Abschnitte radial außerhalb ihres Äquators länger ausgebildet sind als die Abschnitte radial innerhalb des Äquators. Dadurch soll, im Zusammenwirken mit einer axial bezüglich des Äquators symmetrischen Anordnung der Nadellager zwischen den Scheiben bzw. Rollen und einer geänderten Geometrie der Gegenflächen in der Hülse erreicht werden, dass Schmierungsprobleme, die bei Wellengelenken bei hohen Drehzahlen auftreten können, vermieden werden. Nachteilig ist bei dieser Ausgestaltung aber, dass die maximal mögliche Auslenkung der beiden durch das Wellengelenk verbundenen Wellen nur sehr klein ist. Mit anderen Worten: derartige Wellengelenke können nur bei nahezu fluchtenden Wellen verwendet werden.

Wellengelenke, bei denen die Scheiben bzw. Rollen symmetrisch zum Äquator ausgeführt sind, sind in den unterschiedlichsten Varianten bekannt, beispielsweise aus der FR 2 691 768 A, der US 3,490,251 A oder der WO 93/02296 A.

Es kommt bei allen Wellenkupplung in geknickter Lage zu einer Abrollbewegung der Scheiben bzw. Rollen in den Ausnehmungen, wodurch die maximale Auslenkung bestimmt wird. Dieser maximale Auslenkwinkel, wie er bisher möglich war, ist nun für viele Anwendungsgebiete in der Technik, beispielsweise für die Kraftübertragung auf die gelenkten Räder von Kraftfahrzeugen, nicht ausreichend.

Die Erfindung bezweckt hier Abhilfe zu schaffen und sieht die Schaffung eines Tripods vor, das kompakt gebaut ist und doch einen größeren Auslenkwinkel als bekannte Tripode zuläßt.

Erfindungsgemäß werden diese Ziele dadurch erreicht, daß der sphärische Abschnitt der Scheibe bzw. Rolle, der, in Richtung des Armes gesehen, radial außerhalb des Äquators liegt, kürzer ist als der sphärische Abschnitt der Scheibe, bzw. Rolle, der, in Richtung des Armes gesehen, radial innerhalb des Äquators liegt. Durch diese Maßnahme wird der während des Betriebes nicht benötigte, von der Drehachse aus gesehen jenseits des Äquators liegende Teil auf das konstruktiv benötigte Maß reduziert ausgebildet und erlaubt so die Schaffung eines besonders kompakten Gelenkes. Die Möglichkeit dieser Reduktion wurde bisher in der Fachwelt nicht erkannt.

In einer Ausgestaltung der Erfindung ist vorgesehen, daß die Scheibe bzw. Rolle entlang der Achse des sie tragenden Armes längsverschieblich gelagert ist. Dadurch wird erreicht, daß in der ausgelenkten Lage, insbesondere in der am weitest ausgelenkten Lage, die Scheibe sich nach wie vor in dem radialen Abstand zur Welle befindet, in der sich trotz der Auslenkung der Welle auch die Ausnehmung auf der Gegenwelle befindet.

Die Erfindung wird im folgenden an Hand der Zeichnung näher erläutert. Dabei zeigt
die Fig. 1 eine Draufsicht auf ein erfindungsgemäßes Tripod in gestreckter Lage, teilweise im Schnitt,
die Fig. 2 zeigt einen Schnitt entlang der Linie II-II der Fig. 1 in gestreckter Lage und
die Fig. 3 zeigt einen Schnitt analog zur Fig. 2, aber in geknickter Lage des Tripods.

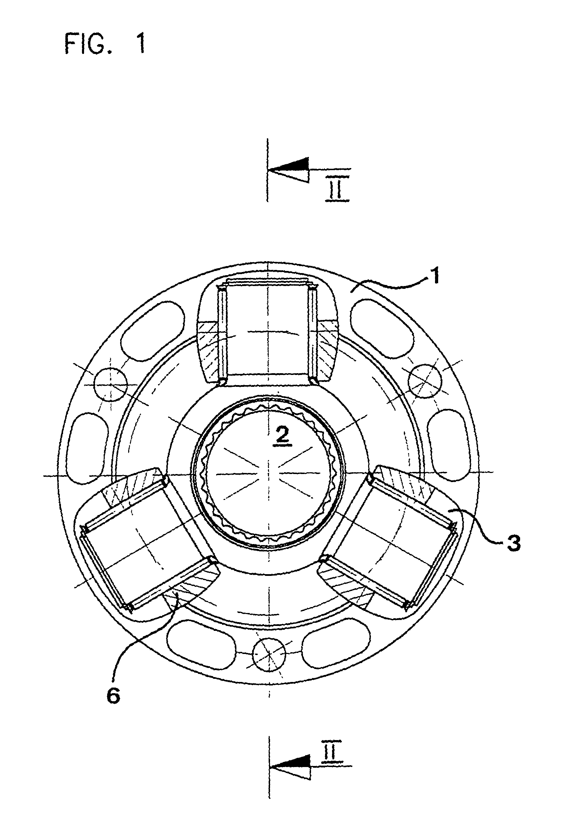

Wie aus Fig. 1 hervorgeht, ist am Ende einer (nicht dargestellten) Welle eine Gelenkscheibe 1 fest angeordnet. Die Gelenkscheibe 1 weist im gezeigten Ausführungsbeispiel drei Ausnehmungen 3 auf. Diese Ausnehmungen weisen den aus Fig. 1 ersichtlichen Querschnitt auf und erstrecken sich in der Richtung parallel zur zugehörigen Wellenachse 4 durch die gesamte Gelenkscheibe 1.

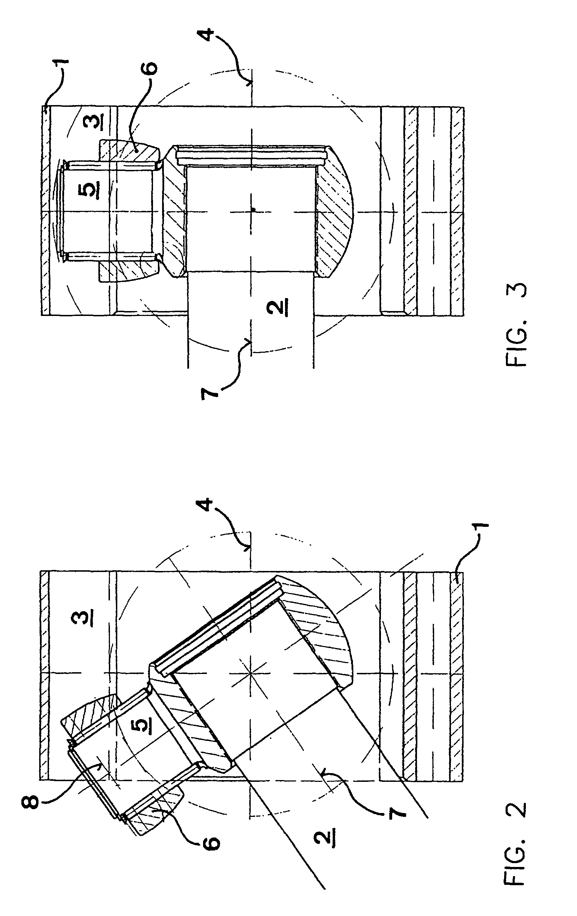

Wie insbesondere aus Fig. 2 hervorgeht, ist im Inneren der Gelenkscheibe 1 die Gegenwelle 2 angeordnet, die an Armen 5 drehbar und entlang der Arme verschiebbar gelagerte Scheiben 6 bzw. Rollen aufweist. Die Scheiben 6 kommen (Fig. 1) in die Ausnehmungen 3 zu liegen, so daß entlang der Berührflächen bzw. -linien das Drehmoment übertragen wird.

Wenn nun die Wellenachse 4 bezüglich der Wellenachse 7 nicht mehr in fluchtender Lage, wie in Fig. 2 dargestellt, verläuft, so verlagern sich die Scheiben 6 entlang der Arme 5 nach außen, ohne dabei aus dem Bereich der Ausnehmungen 3 zu kommen.

Durch die asymmetrische Ausbildung der Scheiben 6 bezüglich ihres Äquators 8 und der Verschiebbarkeit entlang des Armes 5 ist es möglich, die Ausnehmungen 3 nahe an die Wellenachse 4 zu legen, ohne daß es durch die beim Abknicken bedingte Änderung des Abstandes der Scheiben 6 von den Ausnehmungen 3 zu Problemen kommt.

Es vollführt, in der in Fig. 2 gezeigten Lage, jede Scheibe 6 während einer Umdrehung der Welle 2 eine lineare Hin-Herbewegung entlang der Achse des Armes 5 und eine hin-hergehende Drehbewegung um die Achse des Armes 5, wobei gleichzeitig ihre Kontaktlinie mit der Ausnehmung 3 sich parallel zur Achse 4 hin-hergehend verschiebt. Es vollführt somit die Scheibe 6 in der geknickten Lage des Wellenelementes eine echte Taumelbewegung, was erst durch die erfindungsgemäßen Merkmale ermöglicht wird.

Die Erfindung ist nicht auf das gestellte Ausführungsbeispiel beschränkt, sondern kann verschiedentlich abgewandelt werden. So ist es möglich, die Lagerung der Scheiben 6 auf den Armen 5 durch andere als die dargestellten Nadellager vorzunehmen. Es kann selbstverständlich die Montage der Arme bzw. des sie tragenden Kranzes an der Welle 2 auf andere Weise erfolgen und es kann auch die Längsscheibe 1 anders als auf die in Fig. 1 angedeutete Weise mit der sie tragenden Welle verbunden sein.

Die Materialwahl, die Bestimmung der notwendigen Dimensionen und die Auslegung der anderen Parameter des Gelenkes ist für den Fachmann auf dem Gebiete des Gelenkbaues in Kenntnis der Erfindung mit keinerlei Schwierigkeiten verbunden, es soll nur darauf hingewiesen werden, daß alle bei üblichen Tripoden verwendeten Materialien und Schmiermittel auch bei erfindungsgemäßen Tripoden verwendet können.

Es ist auch möglich, die Lagerung der Rollen bzw. Scheiben 6 auf den Armen 5 anders als dargestellt auszubilden, es ist insbesondere möglich, die dargestellten Nadellager durch Gleitlager oder durch beschichtete Oberflächen der miteinader in Kontakt tretenden Bauteile zu ersetzen.

## Patentansprüche

1. Wellengelenk, auch Tripod genannt, bei dem das eine Wellenende mit drei Armen (5), die normal zur Wellenachse (7) verlaufen, ausgestattet ist wobei am Ende jedes Armes und um diesen drehbar nur eine einstückige Scheibe (6) bzw. Rolle angeordnet ist, wobei die Scheibe bzw. Rolle eine sphärische, zu ihrem Äquator (8) asymmetrisch begrenzte Außenkontur aufweist, und wobei weiters am Ende der entgegenstehenden Welle eine Hülse (1) angeordnet ist, die, entsprechend der Winkellage der Arme (5), drei Ausnehmungen (3) aufweist, deren Querschnitt den Rollenaußenflächen angepaßt ist, wobei die Ausnehmungen mit einem zentralen Hohlraum in Verbindung stehen, sodaß die Arme (5) hindurchtreten können, **dadurch gekennzeichnet, daß** der sphärische Abschnitt der Scheibe (6) bzw. Rolle, der, in Richtung des Armes (5) gesehen, radial außerhalb des Äquators (8) liegt, kürzer ist als der sphärische Abschnitt der Scheibe (6) bzw. Rolle, der, in Richtung des Armes (5) gesehen, radial innerhalb des Äquators (8) liegt.

2. Tripod nach Anspruch 1, **dadurch gekennzeichnet, daß** jede Scheibe (6) bzw. Rolle entlang der Achse des sie tragenden Armes (5) längsverschieblich gelagert ist.

## Claims

1. A universal joint, also known as a tripod, in which one shaft end is provided with three arms (5) which extend perpendicularly to the shaft axis (7), wherein at the end of each arm and rotatable thereabout there is arranged only a one-piece disc (6) or roller, wherein the disc or roller has a spherical outer contour which is asymmetrically bounded relative to its equator (8), and wherein further at the end of the opposing shaft there is arranged a sleeve (1) which, corresponding to the angular position of the arms (5), has three recesses (3), the cross-section of which is adapted to the outer surfaces of the roller, wherein the recesses are in communication with a central cavity so that the arms (5) can pass therethrough, **characterised in that** the spherical portion of the disc (6) or roller which, viewed in the direction of the arm (5), is situated radially outside the equator (8), is shorter than the spherical portion of the disc (6) or roller which, viewed in the direction of the arm (5), is situated radially within the equator (8).

2. A tripod according to Claim 1, **characterised in that** each disc (6) or roller is mounted longitudinally displaceably along the axis of the arm (5) carrying it.

## Revendications

1. Articulation pour arbres, également désignée sous le terme tripode, dans lequel une extrémité d'arbre est pourvue de trois bras (5), qui s'étendent perpendiculairement à l'axe (7) de l'arbre, et dans laquelle un seul disque monobloc (6) ou rouleau monobloc est disposé sur l'extrémité de chaque bras de manière à pouvoir tourner autour de ce dernier, et dans laquelle le disque ou le rouleau possède un profil extérieur sphérique limité d'une manière dissymétrique par rapport à son équateur (8), et dans laquelle en outre sur l'extrémité de l'arbre opposé est disposée une douille (1), qui possède, d'une manière correspondant à la position angulaire des bras (5), trois évidements (3), dont la section transversale est adaptée aux surfaces extérieures du rouleau, les évidements étant reliés à une cavité centrale de telle sorte que les bras (5) peuvent les traverser, **caractérisée en ce que** la section sphérique du disque (6) ou du rouleau, qui est située radialement à l'extérieur de l'équateur (8) lorsqu'on regarde dans la direction du bras (5), est plus courte que la section sphérique du disque (6) ou du rouleau, qui est située radialement à l'intérieur de l'équateu (8), lorsqu'on regarde dans la direction du bras (5).

2. Tripode selon la revendication 1, **caractérisé en ce que** chaque disque (6) ou rouleau est monté de manière à être déplaçable longitudinalement le long de l'axe du bras (5) qui le porte.
